# FASCICULE DE BREVET EUROPEEN

(11) **EP 1 120 043 B1**
(45) Date de publication et mention de la délivrance du brevet: **06.10.2004**
(21) Numéro de dépôt: 00101475.2
(22) Date de dépôt: 26.01.2000
(51) Int. Cl.: A21D 13/08, A21D 8/02

(54) **Pâte feuilletée fermentée, précuite et surgelée**
Fermentierter, vorgebackener und tiefgekühlter Blätterteig
Leavened, prebaked and frozen laminated dough

(43) Date de publication de la demande: 01.08.2001
(73) Titulaire: SOCIETE DES PRODUITS NESTLE S.A., 1800 Vevey (CH)
(72) Inventeur: Harlaux, Ginette, 60000 Beauvais (FR); Penet, Sylvie, 60430 Warluis (FR)
(74) Mandataire: Thomas, Alain

(56) Documents cités:
- EP-A- 0 509 566
- WO-A-98/20743
- GB-A- 2 102 269
- GB-A- 2 312 367
- US-A- 5 976 586

## Description

La présente invention a pour objet une pâte feuilletée fermentée précuite surgelée ne rassissant pas après décongélation et un procédé de fabrication d'une telle pâte précuite surgelée.

Le procédé traditionnel de fabrication d'une pâte feuilletée est connu et l'obtention d'un tel produit aéré, feuilleté et croustillant implique un travail long et délicat. La recette traditionnelle est exposée par JL Kiger & al (Techniques modernes en biscuiterie, boulangerie industrielle et artisanale et produits de régime. T1, pages 347-348. Coll. DUNOD, 1968) et décrit une préparation de pâte feuilletée consistant en une succession de tourages, c'est à dire une série de replis de la pâte sur elle-même en emprisonnant une quantité donnée de matière grasse plastique, tel le beurre.

La première étape consiste à mélanger intimement 1 partie de farine et 1/2 partie d'eau (% en poids) et à laisser reposer le pâton obtenu environ 15 minutes. Cette pâte est ensuite laminée en un feuillet carré au milieu duquel on dépose 1 partie de beurre qui est emprisonné dans la pâte par replis des côtés du feuillet : on obtient ainsi un feuillet de beurre entre deux feuillets de pâte. La pâte, après 15 minutes de repos dans un endroit frais et recouverte d'un linge humide, est laminée, repliée sur elle-même en 3 morceaux d'égale longueur puis de nouveau laminée, ce qui mène à un pâton rectiligne constitué de 3 couches de beurre séparées chacune par une bande de pâte. Cette opération de replisllaminage appelée tourage est renouvelée 6 fois, séparée par des étapes de repos de 15 minutes environ. On obtient au final 729 feuillets de beurre séparés par des couches de pâte.

UK 2070408 décrit la préparation d'une pâte feuilletée dans laquelle de la farine, de l'eau, du sel et des morceaux de matière grasse sont mélangés ensemble, de manière à obtenir une pâte hétérogène présentant des morceaux de matière grasse. Cette pâte est laminée et placée dans un endroit frais, avant d'être découpée en un nombre important de lamelles, de préférence de 0.25 mm à 3 mm d'épaisseur, qui sont ensuite agglomérées ensemble, de manière à réaliser une pâte hétérogène, présentant des morceaux de matière grasse et constituée d'une superposition de feuillets. Par la suite, la pâte feuilletée ainsi obtenue est laminée en une pâte de 5 à 6 mm d'épaisseur et est utilisée pour la réalisation de produits alimentaires.

WO 9820744 décrit un procédé de préparation d'une pâte feuilletée, dans lequel on effectue un mélange à température ambiante d'une composition contenant de la farine, du sel, des protéines acides et un agent de fermentation inactivé ; on ajoute à cette composition, au cours de l'étape de mélange, de la matière grasse en morceaux, de manière à obtenir une pâte hétérogène, enfin on incorpore de l'eau à cette pâte, on extrude la pâte de manière à compresser les morceaux de matière grasse et à obtenir une pâte feuilletée. Cette pâte est ensuite stockée à une température de -40°C à +10°C. Dans ce cas la quantité de matière grasse est réduite de plus de moitié par rapport à la recette traditionnelle.

La pâte feuilletée est une pâte grasse qui doit sa structure aérée et croustillante à l'action du gras contenu. En effet, lors de la cuisson, la matière grasse fond et ses gouttelettes s'introduisent entre les particules de pâte ; la vapeur d'eau dégagée au cours de la cuisson est retenue entre ces films de graisse, s'accumule entre les parois de pâte et les écarte en donnant au produit cuit le feuilleté caractéristique.

Un autre type de pâte feuilletée est la pâte à croissants. Il s'agit d'une pâte à brioche dont l'incorporation d'une partie de la matière grasse est réalisée comme pour la pâte feuilletée, c'est à dire par tourage. Cette pâte contient de la farine, de l'eau et/ou du lait, du sucre, de la matière grasse, du jaune d'oeufs, du sel et de la levure. Ainsi, en raison de la présence de levure vivante, la pâte nécessite, avant cuisson, une étape de fermentation qui sera responsable du développement d'une partie du volume final ainsi que du goût caractéristique. Lors de la cuisson, la dilatation du CO₂ produit par les levures ainsi que celle de la vapeur d'eau retenue par les couches de pâte du feuilletage est responsable de la texture feuilletée et aérée des croissants.

Les pâtes feuilletées fermentées sont principalement utilisées pour la fabrication de produits de pâtisserie (salés ou sucrés) individuels. En ce qui concerne la restauration collective ou la restauration hors foyer, il est essentiel de disposer de produits individuels que l'on stocke à l'état cuit surgelé de manière à les décongeler extemporanément peu de temps avant le service ou la mise à disposition du consommateur.

De tels produits cuits que l'on stocke surgelés existent mais posent des problèmes de vieillissement tant à l'état surgelé qu'après décongélation. En effet, lors de longues périodes de stockage à l'état cuit surgelé, ces produits présentent un dessèchement plus ou moins prononcé menant, après décongélation, à des produits dont la croûte est friable, sèche et a perdu de sa croustillance. De plus, une fois décongelés, ces produits ne conservent que peu de temps les propriétés organoleptiques et texturales d'une pâte feuilletée fermentée et on observe ainsi un rassissement rapide dans les quelques heures qui suivent la décongélation.

Les pâtes feuilletées comme tous les produits de boulangerie cuits sont sujets au rassissement. Du point de vue du consommateur le rassissement est perçu comme une diminution de l'acceptation des produits de cuisson en raison de modifications des caractéristiques texturales de ces produits.

Sur un plan plus scientifique, le rassissement est défini comme un ensemble de modifications d'ordre physico-chimiques s'opérant au sein du produit. Les deux principales modifications sont la rétrogradation de l'amidon et une modification de la répartition de l'eau au sein du produit, ou pour le moins une modification de son état de liaison, entraînant dessèchement partiel et raffermissement.

Il est connu de rajouter dans les pâtes de boulangerie des additifs anti-rassissement tels que des dérivés de mono et/ou di-glycérides. Ces derniers formeraient des complexes avec l'amylose empêchant la rétrogradation de celle-ci. L'alpha-amylase bactérienne a été proposée à très faibles doses, elle couperait les chaînes glucidiques dans les régions amorphes et ralentirait ainsi la rigidification de l'ensemble. Une autre approche consiste à stocker le produit frais, à température ambiante sous atmosphère modifiée, CO₂ par exemple, dans un emballage adapté, ce qui diminue la sorption d'eau et permet de retarder le rassissement. Ainsi, la majorité des méthodes et additifs sont utilisés pour augmenter la durée de vie de produits de boulangerie et retarder ou ralentir leur rassissement à l'état frais. Cependant peu nombreuses sont les données relatives à l'amélioration de la conservation et de la préservation des qualités texturales lors et/ou après de longs stockages à l'état surgelé.

Les produits feuilletés, quels qu'ils soient, sont caractérisés par une structure aérée, levée et croustillante. Aussi, sur de longues périodes de stockage à l'état surgelé, de tels produits perdent-ils, une fois décongelés, une partie de cette texture et se transforment-ils en un produit dont la croûte a perdu sa croustillance et s'est ramollie tout en étant plus friable. L'intérieur quant à lui devient rapidement sec et ferme et ne reste plus moelleux. Il se produit aussi une désolidarisation de la croûte et de la pâte créant un espace vide à cette interface, ce qui entraîne un écaillage de la croûte. On assiste à un dessèchement superficiel et à une rétrogradation rapide de l'amidon une fois le produit décongelé. De plus, une fois décongelé, le produit ne conserve que très peu de temps ses caractéristiques organoleptiques optimales et au bout de 3 ou 4 heures il présente tous les signes d'un rassissement avancé. Pour des produits destinés à la restauration hors foyer, un emballage spécifique de chaque article sous atmosphère modifiée n'est pas envisageable du fait de l'importance du nombre d'articles manipulés. Il est donc nécessaire de disposer d'un produit que l'on peut stocker sans emballage spécifique lors de l'entreposage à l'état surgelé.

Dans la suite de la description le terme de "ressuage" définit l'étape de refroidissement à température ambiante d'une pâte cuite après sa sortie du four, visant à permettre une évaporation partielle de l'eau contenue dans la zone périphérique (la croûte) et assurer en outre la répartition de l'eau au sein du produit cuit.

La présente invention a pour but de proposer une pâte feuilletée fermentée cuite surgelée, ainsi qu'un procédé de préparation d'une telle pâte surgelée, présentant des propriétés physiques, texturales et organoleptiques semblables à celles des pâtes feuilletées fermentées traditionnelles et pouvant de surcroît être conservée sur de longues périodes à l'état surgelé sans manifester les symptômes de rassissement après décongélation.

A cet effet, la pâte feuilletée fermentée précuite surgelée selon la présente invention ne présente pas de signe de rassissement après décongélation, présente sur une surface supérieure une pellicule comestible et est susceptible d'être obtenue par un procédé dans lequel on la surgèle rapidement sans ressuage.

De même, dans le procédé de préparation d'une pâte feuilletée selon la présente invention :
- on effectue un prémélange d'une composition contenant, en % en poids, env. 35 à 45 % de farine, env. 0,5 à 1 % de sel, env. 2,5 à 5 % de sucre, env. 2 à 3 % de poudre de babeurre et env. 0,5 à 1 % d'au moins un émulsifiant,
- on ajoute à cette composition au cours de l'étape de mélange env. 16 à 20 % d'eau, env. 3 à 6 % d'oeuf entier liquide et env. 2 à 3,5 % de levure,
- on incorpore à température ambiante env. 20 à 30 % de matière grasse plastique en morceaux,
- on extrude la pâte,
- on superpose au moins deux couches de pâte et on lamine,
- on place la pâte en cellule de fermentation,
- on cuit la pâte,
- on nappe la pâte dès sa sortie du four avec un produit sirupeux,
- on surgèle rapidement la pâte sans ressuage.

Le produit utilisé pour napper la surface supérieure de la pâte cuite en sortie de four peut être un sirop de sucre aromatisé ou non, un sirop de glucose de D.E. variable ou une gelée de fruit liquefiée par chauffage. On utilise de préférence un produit sirupeux à base de glucides ou de dérivés de glucides.

On a constaté que le procédé de préparation de la pâte feuilletée fermentée selon l'invention, bien que ne présentant pas de succession d'étapes de tourage et comprenant des proportions farine/matière grasse/eau similaire à la recette traditionnelle, permet de réaliser dans des conditions de mise en oeuvre simples et rapides, une pâte présentant une texture feuilletée, légère et aérée.

De plus, on a aussi noté avec surprise que le procédé permet d'obtenir un produit feuilleté cuit que l'on peut conserver très longtemps à l'état surgelé et qui ne manifeste pas de signes de rassissement une fois décongelé. Ainsi, après décongélation à température ambiante pendant environ 45 minutes/1 heure 30, le produit peut être entreposé à température ambiante pendant 24 heures environ sans présenter le moindre signe de rassissement sur une telle durée. Ses caractéristiques organoleptiques sont quasiment identiques à celles du produit frais ou juste après décongélation.

La décongélation peut aussi être réalisée à l'aide d'un four à micro-ondes à faible puissance pendant un temps suffisant pour décongeler le produit ou l'amener à une température proche de la température ambiante.

Le nappage de la surface du produit effectué en sortie de four permet de réaliser une barrière à l'eau et limite ainsi les pertes en eau à cette étape ainsi que le dessèchement en surface lors de longues périodes de stockage à l'état surgelé. La surgélation rapide à une température de -30 à -40 °C sans délais réalisée aussi dès la sortie du four, sans ressuage, juste après le nappage, permet de fixer l'eau emprisonnée dans le feuilletage dans l'état de liaison correspondant à celui du produit frais. Enfin, la conservation aux alentours de - 20°C permet de limiter au maximum l'agitation moléculaire, la structure reste figée, la rétrogradation de l'amylose ne peut se faire et le produit reste à l'état frais. La congélation rapide combinée au nappage permet donc de figer la structure, d'emprisonner l'eau et de limiter sa migration.

Ici, on entend par surgélation rapide, un mode de surgélation qui permet d'atteindre, au coeur du produit une température de l'ordre de -20 °C en un temps maximal d'environ 20 minutes.

Dans la suite de la description, on comprendra par température ambiante de boulangerie, une température comprise entre 10 et 25 °C.

Dans le procédé selon l'invention, on peut effectuer l'étape de mélange dans un pétrin pendant env. 1 à 2 minutes, par exemple. Pour effectuer le mélange on peut utiliser un pétrin ARTOFEX ou un pétrin KEMPER travaillant aux vitesses 1 et/ou 2, par exemple.

On peut effectuer le mélange à une température ambiante de boulangerie, par exemple. On effectue donc le mélange d'une composition contenant env. 35 à 45 % de farine, env. 0,5 à 1 % de sel, env. 2,5 à 5 % de sucre, env. 2 à 3 % de babeurre en poudre et env. 0,5 à 1 % d'au moins un émulsifiant.

La farine est de préférence de la farine de blé tendre, le sucre utilisé est de préférence du saccharose cristallisé. L'émulsifiant utilisé peut être un monoglycéride, un mélange de monoglycérides, un ou des dérivés de monoglycérides. Ces émulsifiants peuvent être utilisés seuls ou en combinaison, par exemple.

Le babeurre ajouté aide à la répartition du gras, au graissage de la farine et joue aussi un rôle d'émulsifiant. De manière avantageuse, de l'arôme beurre en poudre peut être ajouté lors de cette étape de mélange de manière à conférer un goût plus marqué au produit surtout lors de l'utilisation de margarine comme matière grasse, par exemple.

On ajoute ensuite à ce mélange env. 16 à 20 % d'eau à température ambiante, env. 3 à 6 % d'oeufs entiers liquide et env. 2 à 3,5 % de levure boulangère fraîche.

On incorpore ensuite env. 20 à 30 % de matière grasse plastique de manière à obtenir une pâte hétérogène. La matière grasse utilisée peut être de la margarine feuilletable, par exemple.

Cette pâte est ensuite extrudée de manière à compresser les morceaux de matière grasse et obtenir une pâte feuilletée. On peut l'extruder à l'aide d'un extrudeur bi-vis commercialisé par Rijkaarrt Maschinen Fabrik, NL - 4147 CT Asperen, par exemple.

La pâte obtenue est ensuite laminée à l'épaisseur désirée en prévoyant une étape de pliage de la pâte par plis ou tuilage. Après laminage la pâte peut être découpée aux dimensions voulues à l'aide de formes de découpe ou d'une guillotine, par exemple.

La pâte feuilletée crue ainsi obtenue est ensuite mise en fermentation dans une cellule de fermentation, notamment à une température d'env. 28 à 38 °C pendant env. 30 à 90 minutes, par exemple, pour permettre à la levure de métaboliser les sucres fermentescibles et de produire une partie de CO₂ responsable de l'augmentation de volume.

Le produit une fois "poussé" peut être cuit à une température de 180 à 250°C environ, pendant un temps suffisant pour assurer un bon développement du feuilletage et obtenir une texture aérée et croustillante. La cuisson peut être réalisée dans un four rotatif à air pulsé de type GOUET, par exemple.

Une fois le produit cuit, dès la sortie du four, on applique un nappage de sa surface supérieure à l'aide d'un produit sirupeux. Le nappage peut être réalisé au pinceau par exemple, à l'aide d'un sirop de sucre, de fruit, une gelée de fruit liquéfiée ou un sirop de glucose, par exemple. Il est important que ce nappage soit réalisé dès la sortie du four sur le produit chaud.

Une fois le nappage effectué, le produit cuit obtenu peut être immédiatement surgelé aux env. de -25 à -40°C sans ressuage. La surgélation peut être réalisée à l'aide d'un tunnel ou d'une cellule de surgélation ou tout autre équipement assurant une température d'env. -25 à -40°C.

Le produit fini surgelé peut être entreposé à une température de -18 à -40 °C environ et stocké dans des cartons, par exemple.

Dans une autre forme de réalisation de l'invention, on prévoit une étape de surgélation de la pâte crue, entre l'étape de laminage et l'étape de fermentation. On peut ainsi conserver la pâte crue à une température de -18 à -40°C environ. Dans cette forme de réalisation, la pâte crue surgelée peut être mise en tempérage avant la mise en chambre de fermentation pour pousse. Le tempérage consiste à stocker le produit à une température de 10 à 20 °C environ pendant un temps suffisant pour obtenir une température à coeur de l'ordre de - 2°C à 2°C. La pâte crue surgelée peut aussi être disposée directement en chambre de fermentation sans tempérage préalable. Dans ce cas, la durée de fermentation sera rallongée aux fins d'obtenir un dégagement gazeux identique au produit préalablement tempéré.

Dans le but d'améliorer et d'augmenter l'hydratation et la rétention en eau du produit certains ingrédients peuvent être rajoutés à ceux de base de base ou en remplacer d'autres. Ainsi, on pourra rajouter des hydrocolloïdes seuls ou en mélanges, il peut s'agir de caroube, de xanthane, de pectine, par exemple. On pourra aussi additionner des pentosanases ainsi que des fibres qui augmentent l'hydratation des farines, améliorent la rétention d'eau et jouent le rôle de régulateur d'humidité. Ces fibres peuvent être des fibres solubles ou non du type lignine, pectine, cellulose, hemicellulose ou encore des extraits de tiges et épis de blé, par exemple.

D'autre part, le remplacement d'une partie de la farine par un mélange d'amidons modifiés et/ou natifs et de gluten permet d'améliorer la rétention d'eau et ralentit encore plus la rétrogradation de l'amidon. Les amidons utilisés peuvent être des amidons de maïs cireux modifiés ou natifs ou des amidons de manioc partiellement prégélatinisés, par exemple.

La pâte feuilletée réalisée selon l'invention peut être utilisée pour la fabrication de produits du type snacks ou rajoutée à des plats cuisinés. Si l'on désire réaliser des produits tels que snacks, tartes, tartelettes, friands, croissants fourrés, par exemple, on pourra remplir ou fourrer un fond de pâte à l'aide d'une sauce, d'une crème, de fromage, de légumes cuits ou blanchis ou de fruits entiers, en purée et/ou en morceaux, éventuellement de viande, d'épices, de noix et/ou d'amandes et/ou de céréales avant l'étape de fermentation ou avant l'étape de cuisson.

La viande peut être du boeuf, du poulet, de la dinde, du veau, du porc, des produit de charcuterie, en morceaux ou hachés, par exemple.

Des légumes entiers, en morceaux ou en purée peuvent être des tomates, des poivrons, des oignons, des champignons, des petits pois, des pommes de terre, des choux, des haricots, par exemple.

Le fromage peut être du gruyère, du bleu, de l'emmenthal, de la mozzarella, du cheddar, par exemple.

La sauce peut être de la moutarde, du ketchup, de la sauce tomate, de la crème fraîche, une sauce blanche ou de la béchamel, par exemple.

Les céréales peuvent être du riz, du blé que l'on a précuit ou du sésame ou du pavot, par exemple.

Les épices peuvent être du poivre, du piment, du curry ou toute autre substance végétale aromatique, par exemple.

Les fruits peuvent être utilisés entiers, en morceaux ou en purée ; il peut s'agir de pommes, de poires, d'abricots, de pêches, de prunes, de fruits rouges, de fruits exotiques, d'ananas, de cerises, de raisins, par exemple.

La sauce des fruits peut être une sauce au chocolat, à la vanille, au caramel, une crème anglaise ou une crème pâtissière, par exemple.

La présente invention a également pour objet le plat cuisiné obtenu par la mise en oeuvre du présent procédé.

### Exemple 1

### Feuilleté à l'abricot.

On prépare d'abord la pâte en effectuant un mélange à température ambiante d'une composition comprenant 40 g de farine de blé type 55, 0,6 g de sel fin, 3,6 g de sucre cristallisé (saccharose), 2,7 g de babeurre doux en poudre, 0,4 g de DIMODAN (émulsifiant commercialisé par la société DANISCO) et 0,2 g de PANODAN (émulsifiant commercialisé par la société DANISCO). On effectue ce mélange dans un pétrin KEMPER pendant 1 minute à la vitesse 1.

On ajoute ensuite 18 g d'eau, 2,7 g de levure boulangère fraîche et 4,3 g d'oeuf entier liquide, on mélange 1 minute à la vitesse 1 et 2 minutes à la vitesse 2.

On ajoute enfin 26 g de margarine à feuilletage sous forme de copeaux: Cette matière grasse est incorporée au mélange pendant 1 minute à la vitesse 1 et enfin 15 sec. à la vitesse 2.

On extrude ensuite la pâte obtenue à l'aide d'un extrudeur bi-vis commercialisé par Rijkaart Maschinen Fabrik, NL 4147 CT Asperen.

Parallèlement on prépare une crème pâtissière pour garniture. Pour ce faire, on mélange dans un mélangeur HOBART à fouet 36 g d'eau, 20 g d'oeuf entier liquide, 0,5 g d'arôme vanille liquide, 0,15 g de colorant naturel jaune ; on incorpore ensuite à ce mélange 20 g de sucre cristallisé (saccharose), 5 g de lait écrémé en poudre et 3 g de farine de blé type 55 par mélange à vitesse 1 pendant 2 minutes et vitesse 2 pendant 2 minutes supplémentaires. On ajoute enfin 3,6 g d'amidon de maïs modifié instant Cleargel* et 1 g d'amidon modifié précuit Ultrasperce* dispersés dans 11,5 g d'huile de tournesol. Le mélange est fouetté 1 minutes à vitesse 1 et 2 minutes à vitesse 2.

(* Amidons modifiés commercialisés par la Société National Starch).

La pâte obtenue plus haut est laminée après superposition de 3 couches de pâte par tuilage jusqu'à une épaisseur de 3 mm et découpée en carrés de 10x10 cm.

On effectue ensuite l'assemblage comme suit :
- humidification des coins des carrés de pâte
- dépose de 12 g de crème pâtissière obtenue précédemment au centre de chaque carré
- dépose d'un oreillon d'abricot sur la crème
- pliage et collage des coins opposés des carrés
- dorage par pulvérisation d'un mélange eau/jaune d'oeuf.

Le produit assemblé est mis en cellule de fermentation aux environs de 32°C pendant 50 à 65 minutes.

Il est ensuite cuit dans un four rotatif à air pulsé à 180°C pendant 16 minutes.

Dès la sortie du four, le produit est nappé à l'aide d'un pinceau avec un mélange d'eau (30%) et de nappage blond arôme abricot (70 %) puis immédiatement surgelé dans un surgélateur aux environs -30 à -40°C sans étape de ressuage. Le produit cuit surgelé est conditionné en carton, eventuellement séparé par des intercalaires en plastique, et stocké aux environs de -20 à -30°C.

Le produit peut être conservé 9 mois aux alentours de -25 °C sans présenter de signe de rassissement après décongélation.

Le produit est décongelé extemporanément par entreposage à une température d'environ 15 à 25 °C pendant environ 45 minutes/ 1 heure 30. Le produit ainsi décongelé présente des caractéristiques organoleptiques et texturales identiques à celles d'un produit non surgelé. Un tel produit conserve en outre ses qualités organoleptiques, après décongélation, sur une période allant jusqu'à 24 heures.

La décongélation du produit cuit surgelé peut se faire de manière accélérée grâce à un passage dans un four micro-ondes à faible puissance de manière à amener le produit aux alentours d'une température de l'ordre de 15 à 25 °C.

Le produit décongelé conserve pendant 24 heures ses caractéristiques texturales et organoleptiques sans présenter de signes de rassissement.

### Exemple 2

On procède de la manière décrite dans l'exemple 1 à l'exception du fait que l'on surgèle le feuilleté à l'abricot assemblé cru avant fermentation et on le conserve aux alentours de -18 à -40°C. On met le produit cru assemblé surgelé en tempérage avant la mise en cellule de fermentation. Le tempérage consiste à stocker le produit cru assemblé en salle de tempérage à une température de 15 à 17 °C pendant 1 heure environ, ceci de manière à obtenir une température à coeur de -2°C à 0°C. Une fois tempéré, le produit est introduit en cellule de fermentation pour pousse.

### Exemple 3

On procède de la manière décrite à l'exemple 2, à l'exception du fait que l'on met le produit cru surgelé en cellule de fermentation sans tempérage préalable. Dans ce cas, la fermentation dure plus longtemps (32 °C pendant environ 90-110 minutes).

Le produit est ensuite cuit nappé, congelé et stocké de manière identique à ce qui est expliqué plus haut. La décongélation est réalisée de manière analogue à ce qui est précisé à l'exemple 1.

### Exemple 4

### Croissant aux amandes

La fabrication de la pâte est identique à la recette du feuilleté à l'abricot. On prépare ensuite, pour cette recette, une crème d'amande en mélangeant les ingrédients suivants (pour 100 g de crème) : env. 15 g de d'huile de tournesol, env. 2 g d'amidon de maïs modifié, env. 11 g de sucre cristallisé, env. 16 g d'oeuf entier liquide, env. 7 g de jaune d'oeuf liquide, env. 25 g de poudre d'amande et env. 22 g d'eau. Les pulvérulents sont dispersés dans les liquides à l'aide d'un mélageur Hobart à petite vitesse puis le mélange est homogénéisé pendant 2 minutes à grande vitesse.

La pâte obtenue de façon identique à l'exemple 1 est découpée en triangles d'environ 50 g. Env. 10 g de crème d'amande sont déposés au centre de ce triangle de pâte qui est ensuite roulé de manière à former un croissant.

Le produit fini obtenu est mis en cellule de fermentation et cuit de manière identique à la procédure décrite dans l'exemple 1.

Dès la sortie du four le produit est nappé d'un sirop de sucre et introduit immédiatement après dans une cellule de surgélation à -40 °C pendant env. 15 minutes de manière à atteindre une température de -20 °C env. à coeur.

Le produit surgelé est stocké en cartons à -20°C. La décongélation du produit peut se faire de manière identique à ce qui est expliqué dans l'exemple 1.

### Exemple 5

### Feuilleté à la poire

On procède de la manière décrite à l'exemple 1, à l'exception du fait qu'une demi poire au sirop remplace l'oreillon d'abricot et que le nappage est réalisé à l'aide d'une gelée de fruit liquéfiée du type gelée de framboise, de groseille ou de poire.

## Revendications

1. Procédé de préparation d'une pâte feuilletée, dans lequel :
- on effectue un prémélange d'une composition de pulvérulents contenant, en % en poids, env. 35 à 45 % de farine, env. 0,5 à 1 % de sel, env. 2,5 à 5 % de sucre, env. 2 à 3 % de poudre de babeurre et env. 0,5 à 1 % d'au moins un émulsifiant,
- on ajoute à cette composition au cours de l'étape de mélange env. 16 à 20 % d'eau, env. 3 à 6 % d'oeuf entier liquide et env. 2 à 3,5 % de levure,
- on incorpore à température ambiante env. 20 à 30 % de matière grasse plastique en morceaux,
- on extrude la pâte,
- on superpose au moins deux couches de pâte et on lamine,
- on place la pâte en cellule de fermentation,
- on cuit la pâte,
- on nappe la pâte dès sa sortie du four avec un produit sirupeux,
- on surgèle rapidement la pâte sans ressuage.

2. Procédé selon la revendication 1 dans lequel on ajoute une étape intermédiaire de surgélation de la pâte crue entre l'étape de laminage et l'étape de fermentation.

3. Procédé selon la revendication 2 dans lequel on ajoute une étape de tempérage entre l'étape de surgélation de la pâte crue et l'étape de fermentation.

4. Procédé selon la revendication 3 dans lequel on dispose sur la bande ou le fond de pâte des aliments en morceaux et/ou en purée et/ou une sauce et/ou une crème avant l'étape de fermentation.

## Claims

1. A process for the production of a puff pastry in which:
- a composition of pulverulent materials is premixed, said composition containing, in weight percent, approx. 35 to 45% flour, approx. 0.5 to 1% salt, approx. 2.5 to 5% sugar, approx. 2 to 3% buttermilk powder and approx. 0.5 to 1% of at least one emulsifier,
- approx. 16 to 20% water, approx. 3 to 6% whole liquid egg and approx. 2 to 3.5% yeast are added to said composition during the mixing step,
- approx. 20 to 30% of plastic fat in pieces is incorporated at ambient temperature,
- the pastry is extruded,
- at least two layers of pastry are placed one on top of the other and are rolled out,
- the pastry is placed in a rising chamber,
- the pastry is cooked,
- immediately on leaving the oven, the pastry is coated with a syrupy product,
- the pastry is quick-frozen without sweating.

2. A process according to claim 1, in which an intermediate deep-freezing step of the raw pastry is added between the rolling-out step and the rising step.

3. A process according to claim 2, in which a temperature adjustment step is added between the deep-freezing step of the raw pastry and the rising step.

4. A process according to claim 3, in which foodstuffs in pieces and/or as a puree and/or a sauce and/or a cream are placed on the strip or base of pastry before the rising step.

## Patentansprüche

1. Verfahren zur Herstellung von Blätterteig, bei dem
- man eine Vormischung einer Zusammensetzung von pulverförmigen Stoffen vornimmt, die in Gew.-% etwa 35 bis 45 % Mehl, etwa 0,5 bis 1 % Salz, etwa 2,5 bis 5 % Zucker, etwa 2 bis 3 % Buttermilchpulver und etwa 0,5 bis 1 % mindestens eines Emulgators enthält,
- dieser Zusammensetzung während des Mischschritts etwa 16 bis 20 % Wasser, etwa 3 bis 6 % flüssiges Vollei und etwa 2 bis 3,5 % Hefe zusetzt,
- bei Umgebungstemperatur etwa 20 bis 30 % plastisches Fett in Stücken einarbeitet,
- den Teig extrudiert,
- mindestens zwei Teigschichten übereinanderlegt und walzt,
- den Teig in eine Fermentationszelle einbringt,
- den Teig gart,
- den Teig bei seinem Austritt aus dem Ofen mit einem sirupartigen Produkt bedeckt,
- den Teig ohne Feuchtigkeitsauswanderung schnell tiefgefriert.

2. Verfahren nach Anspruch 1, bei dem man zwischen dem Walzschritt und dem Fermentationsschritt einen Zwischenschritt der Tiefgefrierung des Rohteigs einfügt.

3. Verfahren nach Anspruch 2, bei dem man zwischen dem Schritt der 'Tiefgefrierung des Rohteigs und dem Fermentationsschritt einen Temperierungsschritt einfügt.

4. Verfahren nach Anspruch 3, bei dem man vor dem Fermentationsschritt auf dem Teigband oder Teigboden Nahrungsmittel in Form von Stücken und/oder Püree und/oder.Soße und/oder Creme anordnet.
